Europäisches Patentamt

European Patent Office

Office européen des brevets

(11) Publication number: 0 223 519
A2

# EUROPEAN PATENT APPLICATION

(21) Application number: 86308682.3

(22) Date of filing: 06.11.86

(51) Int. Cl.4: B05B 7/26

(30) Priority: 06.11.85 US 795498

(43) Date of publication of application:
27.05.87 Bulletin 87/22

(84) Designated Contracting States:
CH DE FR GB IT LI

(71) Applicant: Kent-Moore Corporation
28635 Mound Road
Warren Michigan 48092(US)

(72) Inventor: Heckmann, Rudolph A.
3353 Lakeview Drive
Highland Michigan 48031(US)
Inventor: Lazar, David W.
5650 Lathers
Garden City Michigan 48135(US)

(74) Representative: Singleton, Jeffrey et al
ERIC POTTER & CLARKSON 27 South Street
Reading Berkshire, RG1 4QU(GB)

(54) Method and apparatus for mixing and applying a foam sealant.

(57) A method and apparatus for mixing and applying
a foam sealant which comprises a thermoplastic
base material which is solid at ambient temperatures
and a liquid material containing a foaming agent.
The solid base material is heated (26) and delivered
to a first metering chamber (14). The liquid material
is delivered at ambient temperature to a second
metering chamber (18). The metering chambers (14,
18) periodically deliver the hot molten base material
and the liquid material through separate lines (12, 22;
17, 23) to a mixer (24) where they are mixed and
dispensed through a gun (25a). The base material
preferably includes a thermoplastic material and a
reactive component which, when mixed with a second component in the liquid material, will change the
total composition to yield desired physical characteristics in the foam product such as structural adhe-
sion, high temperature retention and moisture resis-
tance. The liquid material preferably includes a
foaming agent and a component which will react with
the reactive component of the base material.

FIG.1

## METHOD AND APPARATUS FOR MIXING AND APPLYING A FOAM SEALANT

This invention relates to method and apparatus for mixing and dispensing a foam sealant.

In the mixing and dispensing of foam materials, it has been common to mix a foaming agent with the base material to provide a foam product. However, where the product is a sealant and it is desired that the product has substantial thermal deformation resistance, that is it will not deform at elevated temperatures, the nature of the sealant precludes the direct mixing of a foaming agent and sealant in an apparatus. Such a direct mixing would tend to obstruct the flow and soon result in an interruption of the mixing and dispensing.

Accordingly, among the objectives of the invention are to provide a method and apparatus for mixing and dispensing a foam sealant wherein the sealant is of the type that would tend to disable the apparatus.

The present invention is defined in the appended claims and provides a method and apparatus for mixing and applying a foam sealant which comprises a thermosplastic base material that is solid at ambient temperatures, and a liquid material containing a foaming agent. The solid base material is heated to reduce the viscosity so that it will flow and is delivered to a metering chamber. The liquid material is delivered at ambient temperature to a second metering chamber. The metering chambers periodically deliver the hot molten base material and the liquid material through separate lines at a specified volumetric ratio to a mixer where they are mixed and dispensed through a gun. The base material preferably includes a thermoplastic material and a reactive component which when mixed with a second component in the liquid material will change the total composition to yield desired physical characteristics in the foam product such as structural adhesion, high temperature retention - (thermal insulation) and moisture resistance. The liquid material preferably includes a foaming agent and a component which will react with the reactive component of the base material.

A method and apparatus for mixing and dispensing a foam sealant in accordance with the present invention will now be described in greater detail, by way of example, with reference to the accompanying drawings, in which:-

Figure I is a diagram of the apparatus embodying the invention, and

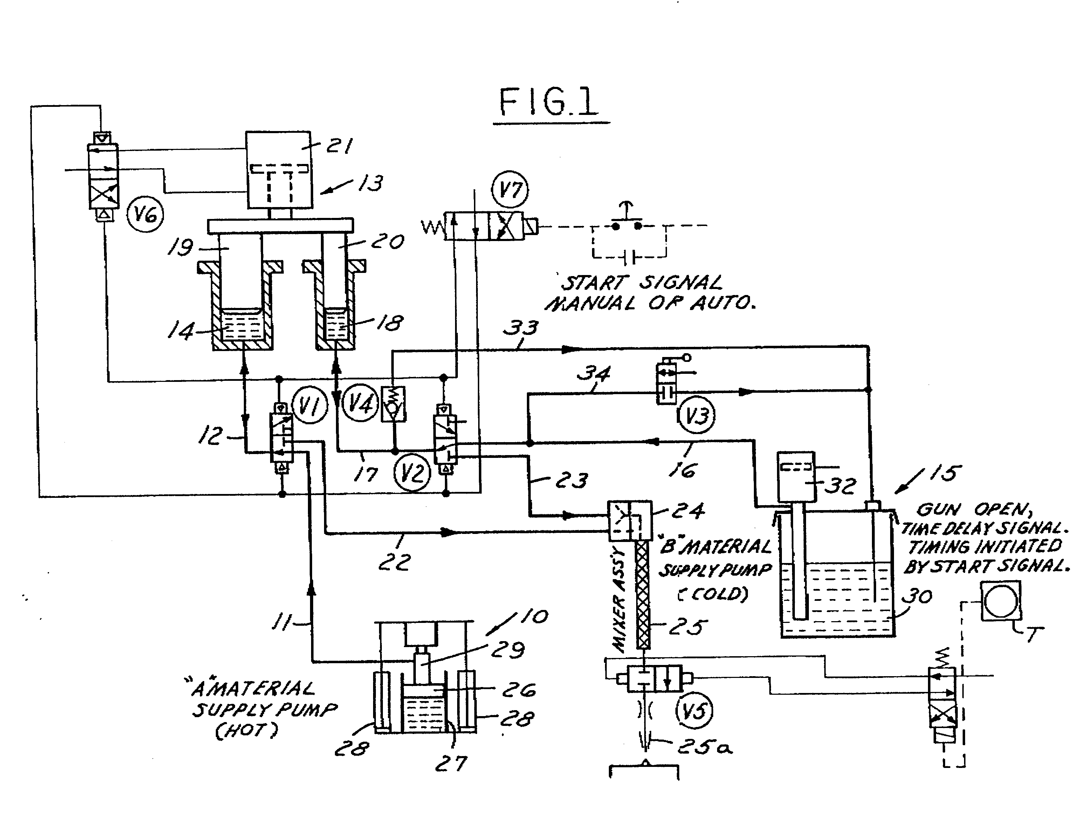

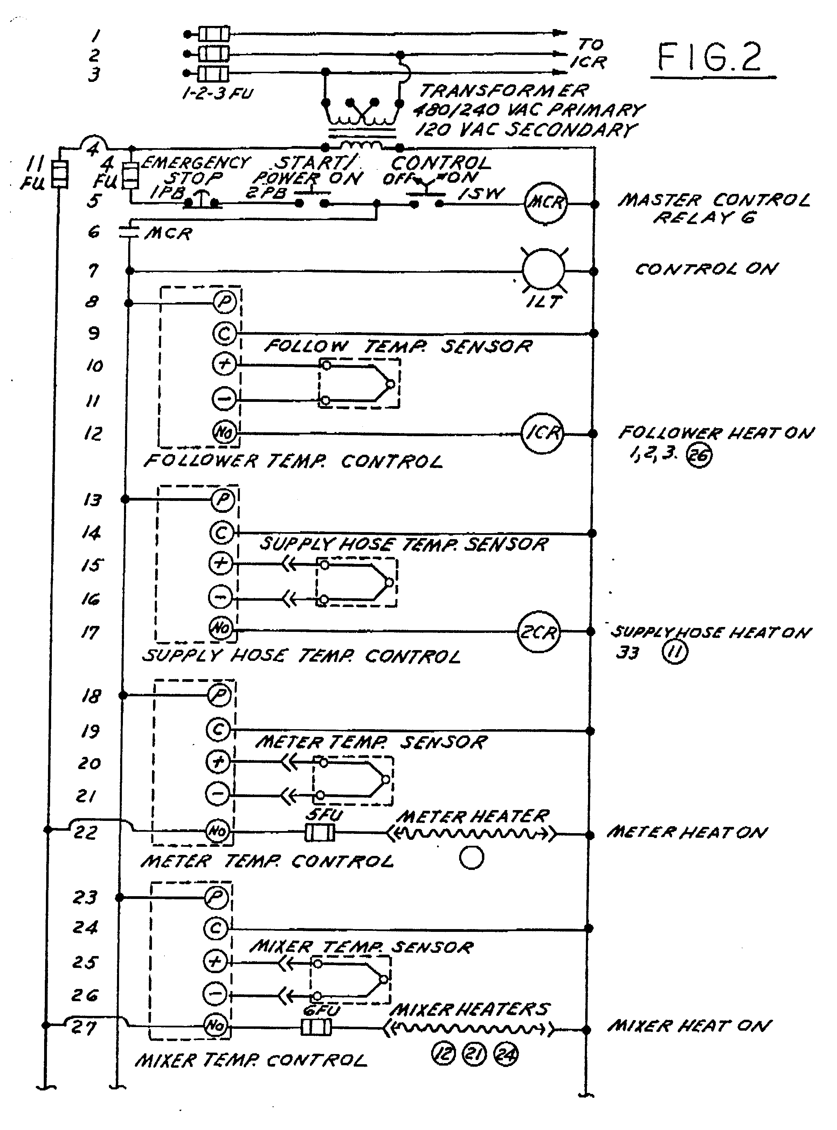

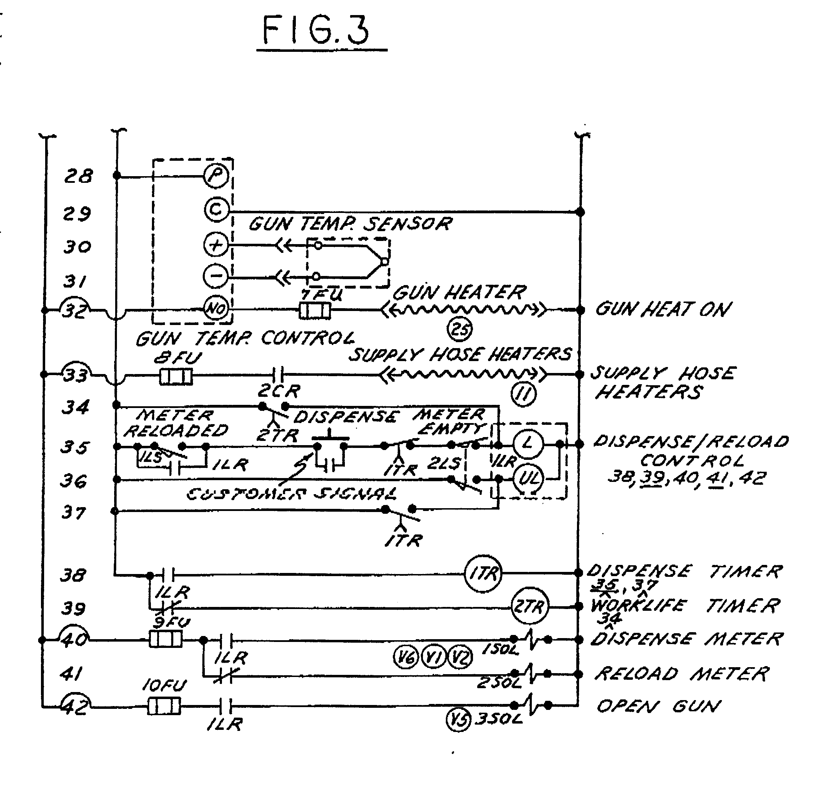

Figures 2 and 3 are schematic electrical wiring diagrams of the apparatus.

Referring to Figure I, the apparatus embodying the invention comprises a device 10 operable to melt a solid base sealant material, as will be described, and direct it through a line II, a valve V₁,

and a line I2 to metering apparatus indicated generally at I3 and more particularly to a metering chamber I4 thereof. A device directs a liquid, as will be described, at ambient temperature through a line I6, a valve V₂ and a line I7 to a second chamber I8 of the metering apparatus I3. The metering apparatus includes plungers I9, 20 associated with the respective chambers I4, I8 and operated by a pneumatic cylinder 2I under the control of a valve V₆. By shifting the valves V₁ and V₂ and operating the cylinder 2I, the separate molten base material in the chamber I4 and the liquid additive material in the chamber I8 are directed through the lines I2, 22 and I7, 23, respectively, to a mixer block 24 and thence to a mixer 25 and a valve V₅ that controls a nozzle 25a.

The device I0 for melting and delivering the solid base material through the line II is of well known construction and comprises a heated platen 26 which is moved downwardly within a container 27 by cylinders 28 to melt progressively the sealant so that it can be delivered by a pump 29 which is run continuously.

The device I5 comprises a container 30 which includes a pump 32 which delivers the liquid through the line I6.

The lines II, I2 and 22 are provided with heating devies to maintain the temperature of the molten base material. The lines I6, I7 and 23 are at ambient temperature.

The system further includes a pressure relief valve V₄ which functions on opening, to return the liquid additive material through a line 33 to the container 30. A manual valve V₃ controls return flow through a line 34.

In operation, the pump 29 operates continuously and delivers the hot molten base material through the line II and valve V₁ to the chamber I4. Similarly, the pump 32 delivers the liquid additive material through the line I6, valve V₂ and the line I7 to the chamber I8. The pumps 29, 32 are of the type which will stall without damage.

The valves V₁, V₂, V₆ and V₇ are of electropneumatic type and comprise solenoid-operated directional valves.

Figures 2 and 3 are schematic diagrams showing the electrical control of the apparatus embodying the invention.

Referring to Figure 2, power for a transformer is supplied to parallel lines which include a master relay and associated on-off controls. Power is supplied to a temperature sensor associated with the platen 26 which controls the temperature of the platen. Similarly, sensors and controls are provided for the heaters of the supply hoses II, I2, 22 the

mixer 25, the valve V₅ and the nozzle 25a. Limit switches control the action of dispensing and reloading the chambers 14, 18 and associated timers are provided with power.

When it is desired to deliver the foam sealnt to form, for example, a gasket, the valve V₅ is shifted permitting the foam sealant to be delivered from the mixer 24 to the nozzle 25a. Simultaneously, the valves V₁, V₂ and V₆ are shifted, simultaneously to move the plungers 19, 20 and deliver separately the hot molten material to the lines 12, 22, and the room temperature liquid material through the lines 17, 23, to the mixer block 24, and then displace the material in the mixer 25 through the nozzle 25a. The ratio of the amount of hot molten material relative to the amount of liquid material is controlled by the size of the diameters of the chambers 14, 18 and the associated plungers 19, 20 and their stroke and may, for example, have a ratio of 10:1. the location of the mixing device 25 is adjacent the nozzle 25a so that after the materials are mixed, they have only a short distance to travel from the mixer to the nozzle.

In a typical foam sealant, the base material comprises a thermoplastic material with a thermoplastic material and a reactive component which when mixed with a second component in the liquid material will change the total composition to yield desired physical characteristics in the foam product such as structural adheshion, high temperature retention and moisture resistance. The liquid additive preferably comprises a foaming agent and a reactive component which will react with the reactive component of the base material.

In a typical composition, the base material comprises a mixture of a thermoplastic material such as ethylene propylene rubber and a reactive component such as a thermosetting material, ethylene propylene dimer butyl reactive rubber, such as chlorobutyl, an epoxy such as ATBN or CBTN modified systems, carboxylic materials such as EVAS, polyurethanes, polyesters and polyals. The reactive component of the base material comprises a small portion of the base material, for example of the order of 10% by weight. The liquid material may comprise a foaming agent, such as cellogon, which, through a chemical reaction in the presence of heat, reacts with a second component such as dicyandiamine, isocyanates, polyfunctional isocyanates, zinc, or sulphur. The liquid material may also include an accelerator for the foaming agent and an accelerator for the reactive components.

## Claims

1. A method of mixing and applying a foam sealant which comprises a thermoplastic base material that is solid at ambient temperatures and a liquid material containing a foaming agent, characterised in that it comprises the steps of heating the solid base material to melt it, periodically delivering the molten base material to a first metering chamber (14) in a first line (11, 12) periodically delivering the liquid material at ambient temperature in a second line (16, 17) to a second metering chamber - (18), periodically metering the hot molten base material and the liquid material from the first and second chambers (14, 18) through separate third and fourth lines (22, 23) to a mixer (24) where they are mixed and dispensed through a valve (V₅) and a nozzle (25a).

2. A method according to claim 1, characterised in that the base material includes a first reactive component, and the liquid material includes a second reactive component.

3. A method according to claim 1 or 2, characterised in that the hot molten base material and the liquid material are delivered from the first and second chambers (14, 18) substantially simultaneously.

4. A method according to any of claims 1 to 3, characterised in that it includes the further steps of heating the first line (11, 12) delivering the hot molten base material to the chamber (14), and heating the third line (22) delivering the hot molten material from the first chamber (14) to the mixer (24) to maintain the temperature of the hot molten material.

5. A method according to any of claims 1 to 4, characterised in that it includes the further steps of heating the hot molten material in the first chamber (14) and in the mixer to maintain the temperature of the hot molten material.

6. A method according to any of claims 1 to 5, characterised in that the first and second reactive components are such that the resultant foam product has structural adhesion, high temperature retention (thermal insulation) and moisture resistance.

7. A method according to any of the preceding claims, characterised in that it includes the further step of continuously recirculating excess liquid material from the second line (17), which connects a source of liquid material (15) to the cocond metering chamber (18), through a fifth line (33) back to the source of liquid material (15).

8. Apparatus for mixing and applying a foam sealant which comprises a thermoplastic base material that is solid at ambient temperatures and a liquid material containing a foaming agent, characterised in that the apparatus comprises means (26) for heating the solid base material to melt it, means (29) for delivering the hot molten base material to a first metering chamber (14), means (32) for delivering the liquid material at ambient temperature to a second metering chamber (18), a mixer (24), means (19, 20, 21) operable periodically to force the molten base material and the liquid material from the respective first and second chambers through separate lines (12, 22; 17, 23) to the mixer (24) where they are mixed, and a dispensing valve (V₅) associated with the mixer.

9. Apparatus according to claim 8, characterised in that it further includes first valve means (V₁) for controlling the flow of hot molten material to and from the first chamber (14), and second valve means (V₂) for controlling the flow of liquid material at ambient temperature to and from the second chamber.

10. Apparatus according to claim 8 or 9, characterised in that it includes valve means (V₆) for controlling the operation of the means (19, 20, 21) for forcing material out of the first and second chambers (14, 18).

11. Apparatus according to any of claims 8 to 10, characterised in that the means for forcing material from the first and second chambers (14, 18) comprises pistons (19, 20) associated with the respective chambers.

12. Apparatus according to any of claims 8 to 11, characterised in that it further includes heater means associated with lines (11, 12) extending from the means (26) for melting the solid material to the first chamber (14), heater means associated with a line (12, 22) from the first chamber (14), to the mixer (24), and heater means associated with the mixer for maintaining the temperature of the base material.

13. Apparatus according to claim 9, and any claim appended thereto, characterised in that the first and second valve means are each in the form of a single valve.

FIG.1

START SIGNAL MANUAL OR AUTO.

GUN OPEN, TIME DELAY SIGNAL. TIMING INITIATED BY START SIGNAL.

"A" MATERIAL SUPPLY PUMP (HOT)

"B" MATERIAL SUPPLY PUMP (COLD)

MIXER ASS'Y

0 223 519

FIG.2

# FIG.3